# EUROPEAN PATENT APPLICATION

(11) **EP 4 764 602 A1**
(43) Date of publication of application: **24.06.2026**
(21) Application number: 24222348.5
(22) Date of filing: 20.12.2024
(51) Int. Cl.: G01S 7/4865, G01S 7/497, G01S 17/36, G01S 17/89, G01S 17/894

(54) **TOF CAMERA UNIT WITH IMPROVED DISTANCE MEASUREMENT**

(71) Applicant: Hexagon Innovation Hub GmbH, 9435 Heerbrugg (CH)
(72) Inventor: BESTLER, Simon, 88085 Langenargen (DE); SCHWEIG, Eike, 9400 Rorschach (CH)
(74) Representative: Kaminski Harmann

(57) **Abstract**

The present invention relates to a time-of-flight (ToF) camera unit 1 configured for capturing three-dimensional point-cloud data of an environment 11, wherein the ToF camera unit 1 comprises a laser emitter 30 configured to emit modulated light signals 7 when triggered in accordance with a laser trigger signal 6, and a sensor chip 5. The sensor chip 5 comprises detector cells 8 configured to receive reflections 9 of the emitted light signals 7 at an object 10 in the environment 11, and a chip-internal circuit 12 configured to modulate, dependent on a clock signal 13 with a defined clock signal frequency, an intermediate signal 14 with a defined intermediate signal frequency into the laser trigger signal 6, and a processing unit configured to determine a distance between the ToF camera unit 1 and the object 10 in the environment 11 based on detector cells output. The ToF camera unit 1 further comprises a further circuit 15 comprising a first return path configured to capture a reference clock signal 16 from the clock signal 13, and a second return path configured to capture a reference laser trigger signal 17 from the laser trigger signal 6, and a time resolver 18, wherein the time resolver 18 is configured to detect time information of the reference clock signal 16 and time information of the reference laser trigger signal 17. The processing unit is configured to further determine the distance between the ToF camera unit 1 and the object 10 in the environment 11 based on the reference clock signal 16 and the reference laser trigger signal 17, and/or the time information of the reference clock signal 16 and the time information of the reference laser trigger signal 17.

## Description

### FIELD OF THE INVENTION

The present invention relates to a time-of-flight (ToF) camera unit configured for capturing three-dimensional point-cloud data of an environment.

### BACKGROUND OF THE INVENTION

Time-of-flight (ToF) includes a variety of methods that measure the time that an object, particle or wave needs for traveling a distance in a medium. Known ToF cameras can obtain depth measurements of objects in a scene for every pixel of the depth image simultaneously or for a segment (region of interest: ROI) of the ToF sensor, wherein the depth image is captured with a ToF camera. The term ToF camera / ToF device covers two types of ToF devices, namely direct ToF (dToF) devices and indirect ToF (iToF) devices. Another often used method for distance determination is called Frequency Modulated Continuous Wave (FMCW), in particular Coherent Frequency Modulated Continuous Wave (CFMCW).

For capturing an image, an iToF device or camera typically illuminates the scene with a modulated wave and images the backscattered wave with an image sensor having, for example, a pixel array, wherein the detector consists of at least two buckets which alternating receives and accumulates the electrons created by the received light wave. The two buckets are filled alternately in synchronization with the transmitter.

The iToF device typically calculates a delay between an emitted modulated light signal and the detected backscattered or reflected modulated light signal for obtaining depth measurements based on the alternate filling of the two buckets of the detector of the iToF device. During distance measurement using an iToF device, however, a so-called cyclic error can occur, whereby the cyclic error results from an assumption of a signal shape of a signal, in particular a laser trigger signal, of the emitting path of the iToF device. If this signal shape were ideally rectangular, sinusoidal, triangular, etc., the phase could be determined exactly without the cyclic error correction. However, as the exact signal shape of the signal of the emitting path is not known, it has to be corrected.

The document US 2024/0193800 A1 discloses a cyclic error correction with an internal phase shift of the laser signal to the detector modulation clock/frequency. This is used to record and calibrate the cyclic error. The disclosed time-of-flight imaging apparatus comprises a circuitry configured to demodulate depth information representing a distance to a scene from a modulated light sensing signal represented by modulated light reflected from the scene by correlating the modulated light sensing signal with a signal comprising one or more phase-shifted phase locations having a phase shift with respect to a first phase location; and to use the one or more phase-shifted phase locations to correct a deviation of the distance to the scene about an expected function.

This phase shift is insufficient and the values that are set do not correspond to the actual phase shift. This means that the cyclic error cannot be calibrated accurately enough and must be calibrated with an additional calibration setup like mechanical range variation or any other optical delay mechanism like fiber optics etc. This is complicated, time-consuming, requires a lot of space and can only be carried out in production or during maintenance. Thus, recalibration due to ageing of the device can only be carried out by the service team and not by the customer.

A further problem with prior art ToF camera systems, in particular LiDAR systems, is the temperature drift (temperature-dependent distance error). While prior art total stations have an internal optical calibration path and prior art terrestrial laser scanners have the Nadir, which can be used to calibrate the absolute distance over temperature in the device during use, prior art ToF camera systems require a complex calibration in production, where the system is calibrated over temperature in a time-consuming procedure. Internal calibration paths of ToF camera systems, such as an "optical bypath" which directs light from the transmitter directly to the detector or a dedicated pixel on the detector to "track" the zero distance, have the disadvantage of being more complex and causing crosstalk.

Accordingly, there is a need for ToF camera systems in which the distance measurement is improved, in particular in which the cyclic error affecting the distance measurement can be determined and corrected. There is also a need for ToF camera systems in which the temperature drift, which in turn can affect the cyclic error, can be determined and corrected.

### OBJECT OF THE INVENTION

It is therefore an object of the invention to provide a ToF camera unit, a method for determining a distance between a ToF camera unit and an object in the environment and a computer-readable storage medium that overcome the disadvantages of the prior art.

It is another object of the invention to provide a ToF camera unit with an improved distance measurement.

It is another object of the invention to provide an improved method for determining a distance between a ToF camera unit and an object in the environment.

These objects are achieved by realizing at least part of the features of the independent claims. Features which further develop the invention in an alternative or advantageous manner are described in the dependent patent claims.

### SUMMARY OF THE INVENTION

The present invention relates to a time-of-flight (ToF) camera unit, in particular an indirect time-of-flight (iToF) camera unit, configured for capturing three-dimensional point-cloud data of an environment, wherein the ToF camera unit comprises a laser emitter configured to emit modulated light signals when triggered in accordance with a laser trigger signal, and a sensor chip.

The sensor chip comprises detector cells configured to receive reflections of the emitted light signals at an object in the environment, and a chip-internal circuit configured to modulate, dependent on a clock signal with a defined clock signal frequency, an intermediate signal with a defined intermediate signal frequency into the laser trigger signal, and a processing unit / computing unit configured to determine a distance between the ToF camera unit and the object in the environment based on detector cells output. Alternatively, the processing unit can be comprised by a further circuit of the ToF camera unit, in particular by an FPGA of the further circuit, instead by the sensor chip.

The ToF camera unit further comprises a further circuit comprising a first return path (also called first reference path) configured to capture a reference clock signal from the clock signal, and a second return path (also called second reference path) configured to capture a reference laser trigger signal from the laser trigger signal, and a time resolver, wherein the time resolver is configured to detect time information and/or phase information of the reference clock signal and time information and/or phase information of the reference laser trigger signal.

Optionally, the time resolver can be configured to detect a phase position of a periodic sampling of the reference clock signal and the reference laser trigger signal. In other words, the accuracy of the signal measurement depends on the length of the burst, the number of samples and the clock offset between the sampling and modulation clock. In order to determine the phase position accurately, the sampling clock may not be synchronized to the trigger clock.

The processing unit is configured to further determine the distance between the ToF camera unit and the object in the environment based on the reference clock signal and the reference laser trigger signal, and/or the time information of the reference clock signal and the time information of the reference laser trigger signal.

Optionally, the processing unit can be configured to correct a determined distance between the ToF camera unit and the object in the environment based on the reference clock signal and the reference laser trigger signal and/or the time information of the reference clock signal and the time information of the reference laser trigger signal.

Optionally, the time resolver can be configured to detect phase information, in particular phase courses and/or phase positions, of the reference laser trigger signal and the reference clock signal.

This invention has the advantage over prior art systems that the distance determination between the ToF camera unit and the object in the environment is not only based on the delay between the emitted modulated light signal and the detected backscattered or reflected light signal, but is also improved by using the above mentioned signals and/or information and is also less error-prone. In particular, all errors between laser trigger signal generation and clock signal can be determined.

In an exemplary embodiment of the ToF camera unit according to the invention, the processing unit can be configured to compare a phase of the reference laser trigger signal with a phase of the reference clock signal, and determine a misalignment error, which can lead to a shift in an actual phase position of the laser trigger signal from a phase position intended for the laser trigger signal, based on the comparison of the phases of the reference laser trigger signal and the reference clock signal.

In a further exemplary embodiment of the ToF camera unit according to the invention, the processing unit can be configured to determine a misalignment error based on a modulation of the intermediate signal into the laser trigger signal such that the laser trigger signal has a laser trigger frequency with a value which, multiplied by a number n, results in a value of the intermediate signal frequency, wherein the number n is a natural number, and a shifting of a phase of the laser trigger signal stepwise by the value of the laser trigger frequency, wherein the number of steps that the phase of the laser trigger signal is shifted corresponds to the number n. The misalignment error can be an error between an actual shift of the phase of the laser trigger signal and an intended shift of the phase of the laser trigger signal. Optionally, the processing unit can be further configured to calibrate-out the misalignment error.

Each of these two embodiments have the advantage that the misalignment error / cyclic error can be determined simply, accurately and internally in the device respectively by use of software and can optionally also be calibrated out accurately without complex procedures, in particular without step wise reference distance measurements.

In other words, the previous described embodiments relate to an internal electronic calibration path for iToF systems to compensate the cyclic error in the device without external mechanical calibration components. In addition, the temperature drift in the device can optionally be measured and compensated.

Further, an electrical phase shift (temporal offset of the laser trigger signal) can be set in the iToF camera. This offset is affected by a cyclic error and is therefore not very accurate and leads to distance errors.

An electric phase sweep with multiple phase shifts to compensate to measure and compensate the cyclic error. These phase shifts can be inaccurate and leads to a wrong cyclic error calibration and leads to distance errors.

With one or both of these embodiments, the phase shift can not only be set, but also precisely measured and determined. This means that the cyclic error can be calibrated with the internal phase shift of the iToF camera.

In other words, in the artificial / virtual railroad described, the laser trigger signal is phase-shifted in n discrete steps, which is ideally identical to an equivalent distance change. This allows to calibrate out the error that the actual phase shift (n + epsilon) has compared to the perfect phase shift n.

In a further embodiment, the processing unit can be configured to determine phase positions of the reference clock signal based on the time information of the reference clock signal, and/or phase positions of the reference laser trigger signal based on time information of the reference laser trigger signal. The phase information mentioned above, which contains for example phase positions, can accordingly also be understood as part of the time information.

The determined phase positions of the reference clock signal and/or phase positions of the reference laser trigger signal can be used in the previously described comparison of the phase of the reference laser trigger signal with the phase of the reference clock signal to precisely determine the misalignment error. In particular, determining the phase positions of the reference laser trigger signal is advantageous for determining the misalignment error, as the misalignment error can lead to a shift in an actual phase position of the laser trigger signal from a phase position intended for the laser trigger signal, as already explained above.

In a further embodiment, the laser emitter can comprise a laser diode, in particular a vertical-cavity surface-emitting laser (VCSEL), and a laser driver, wherein the laser driver can be configured to activate the laser diode based on a drive signal, in particular wherein the chip-internal circuit can be configured to modulate the laser trigger signal into the drive signal.

In a further embodiment, the further circuit can comprise a third return path configured to capture a reference drive signal from the drive signal, and the time resolver can be configured to detect time information of the reference drive signal. Optionally, the drive signal can be modulated (e.g. adaptation to typical LVDS levels, etc.), to be usable as the power signal for controlling the VCSEL.

In a further embodiment, the inventive ToF camera unit or a system comprising the inventive ToF camera unit can further comprise a receiving unit, wherein the receiving unit is configured to receive an emitted light signal and to feed back/send a reference light signal to the time resolver over a further (fourth) return path. This allows to measure and in particular to calibrate an influence of the laser diode (e.g. the VCSEL) on the emitted light signal.

Optionally, the processing unit is configured to further determine the distance between the ToF camera unit and the object in the environment based on the reference drive signal and/or the time information of the reference drive signal. This advantageously results in a more precise and less error-prone distance measurement with the ToF camera unit, in particular in a more precise and less error-prone determination of the misalignment error.

In a further embodiment, the misalignment error can be at least caused by temperature differences / temperature fluctuations / temperature variations in the ToF camera unit. In other words, the temperature drift in the device, which is mainly caused by the electronics in the transmission path of the ToF camera unit, influences the misalignment error (cyclic error) or absolute distance variations and can optionally also be determined by means of the previous described embodiments relating to the determination of the misalignment error. This advantageously results in a more precise and less error-prone determination of the misalignment error.

In a further embodiment, the chip-internal circuit can comprise a first phase locked loop (PLL), in particular wherein the first PLL can be configured to modulate the clock signal into the intermediate signal, and/or the time resolver can be configured as a digital-I/O unit, wherein the digital-I/O unit can be comprised by a field programmable gate array (FPGA) of the further circuit, and/or a time-to-digital converter (TDC), and/or an analog-to-digital converter (ADC). This embodiment has the advantage that the ToF camera unit can be installed using commercially available / standard / common components.

In a further embodiment, the clock signal can comprise a clock signal frequency in a range from 10 MHz to 50 MHz, in particular 24 MHz, and/or the intermediate signal can comprise an intermediate signal frequency in a range from 600 MHz to 1200 MHz, in particular 960 MHz, and/or the laser trigger signal can comprise a laser trigger frequency in a range from 10 MHz to 150 MHz, in particular 60 MHz.

In a further embodiment, the determination of the distance between the ToF camera unit and the object in the environment can be based on the determination of a phase difference between phases of the light signals emitted by the laser emitter and phases of the reflected light signals received by the detector cells. This advantageously results in a more precise and less error-prone distance measurement with the ToF camera unit.

The present invention further relates to a method for determining a distance between a ToF camera unit and an object in the environment, wherein the ToF camera unit is configured for capturing three-dimensional point-cloud data of the environment. The ToF camera unit comprises a laser emitter configured to emit modulated light signals when triggered in accordance with a laser trigger signal, and a sensor chip. The sensor chip comprises detector cells configured to receive reflections of the emitted light signals at an object in the environment, and a chip-internal circuit, and a processing unit. The ToF camera unit further comprises a further circuit comprising a first return path and a second return path, and a time resolver.

The method according to the invention comprises the steps of:
- modulation of, dependent on a clock signal with a defined clock signal frequency, an intermediate signal with a defined intermediate signal frequency into the laser trigger signal, and
- determination of the distance between the ToF camera unit and the object in the environment based on detector cells output, and
- capturing a reference clock signal from the clock signal and a reference laser trigger signal from the laser trigger signal, and
- detecting time information of the reference clock signal and time information of the reference laser trigger signal, and
- determination of the distance between the ToF camera unit and the object in the environment based on the reference clock signal and the reference laser trigger signal, and/or the time information of the reference clock signal and the time information of the reference laser trigger signal.

Optionally, the reference clock signal and/or the reference laser trigger signal can be processed by (various) algorithms, calibrations and/or corrections before a distance between the ToF camera unit and the object in the environment is determinable based on the reference clock signal and the reference laser trigger signal, and/or the time information of the reference clock signal and the time information of the reference laser trigger signal.

In an exemplary embodiment of the method according to the invention, the method can further comprise the steps of: comparison of the phase of the reference laser trigger signal with a phase of the reference clock signal, and determination of a misalignment error, which can lead to a shift in an actual phase position of the laser trigger signal from a phase position intended for the laser trigger signal, based on the comparison of the phases of the reference laser trigger signal and the reference clock signal.

In a further exemplary embodiment of the method according to the invention, the method can further comprise the steps of: modulation of the intermediate signal into a laser trigger signal such that the laser trigger signal has a laser trigger frequency with a value which, multiplied by a number n, results in a value of the intermediate signal frequency, wherein the number n is a natural number, and shifting of a phase of the laser trigger signal stepwise by the value of the laser trigger frequency, wherein the number of steps that the phase of the laser trigger signal is shifted corresponds to the number n, in order to determine a misalignment error, wherein the misalignment error can be an error between an actual shift of the phase of the laser trigger signal and an intended shift of the phase of the laser trigger signal.

The present invention further relates to a computer-readable storage medium comprising instructions which, when executed by a processing unit of the ToF camera unit according to any of the previous described embodiments, cause the processing unit to carry out the steps of the method according to any of the previous described embodiments.

### BRIEF DESCRIPTION OF THE DRAWINGS

The invention is illustrated in more detail below, purely by way of example, with reference to working examples shown schematically in the drawing. Identical elements are labelled with the same reference numerals in the figures. The described embodiments are generally not shown true to scale and they are also not to be interpreted as limiting the invention.
Figures 1 and 2 show schematic illustrations of exemplary embodiments of the ToF camera unit according to the invention.
Figures 3A-3B show schematic illustrations of timing graphs to illustrate the phase courses, phase positions and phase shifts of corresponding signals and the phase error.
Figure 4 shows a schematic illustration of a timing graph to illustrate the temperature-induced phase shift.

### DETAILED DESCRIPTION OF THE DRAWINGS

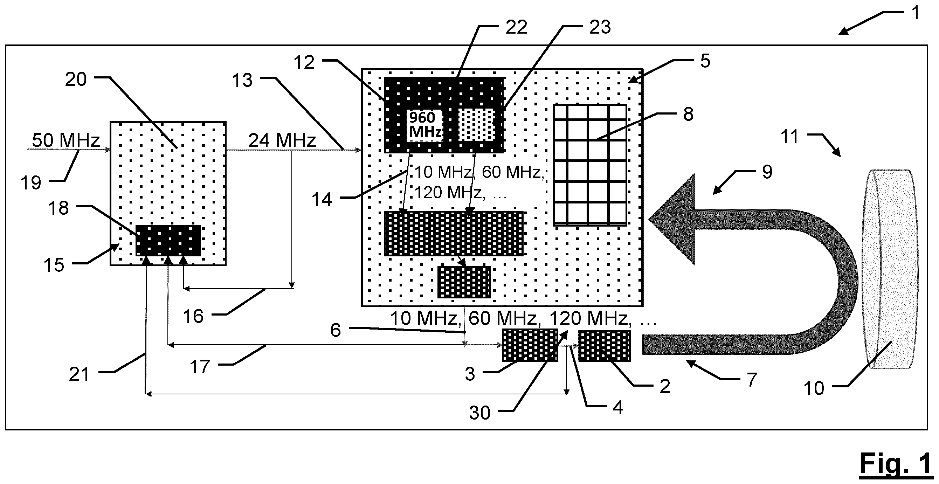

**Figure 1** shows a schematic illustration of an exemplary embodiment of the ToF camera unit 1 according to the invention. The ToF camera unit 1 comprises a laser emitter 30 configured to emit modulated light signals 7 when triggered by / via / based on the laser trigger signal 6. By way of example, the laser emitter 30 comprises the laser diode 2, in particular a laser VCSEL, and the laser driver 3, wherein the laser driver 3 activates the laser diode 2 based on the drive signal 4.

The ToF camera unit 1 comprises the sensor chip 5, wherein the sensor chip 5 comprises detector cells 8 configured to receive reflections 9 of the emitted light signals 7 at an object 10 in the environment 11, and the chip-internal circuit 12, which modulates, dependent on the clock signal 13 with a defined clock signal frequency (in the shown example 24 MHz), the intermediate signal 14 with a defined intermediate signal frequency (in the shown example 960 MHz) into the laser trigger signal 6.

The detector cells / pixels 8 of the sensor chip 5 are configured such that they detect the returning photons of the reflected light 9, whereby an electric charge is then generated. This electric charge accumulates as long as returning photons of the reflected light 9 hit the pixels 8, whereby the time in which the electric charge is generated is also recorded in addition to the electric charge. The detector cell output is accordingly the difference in accumulated electric charge between two detector cells 8, based on which phase differences from the time of emission of light 7 and the time of detection of reflected light 9 are determined. For example, the detector cells 8 have a conventional CMOS image sensor structure and can capture high-resolution 3D images even with a compact size.

The ToF camera unit 1 comprises the further circuit 15 comprising a first return path which captures the reference clock signal 16 from the clock signal 13, and a second return path which captures the reference laser trigger signal 17 from the laser trigger signal 6. The ToF camera unit 1 further comprises the time resolver 18, wherein the time resolver 18 detects time information of the reference clock signal 16 and time information of the reference laser trigger signal 17.

The processing unit of the ToF camera unit determines a distance between the ToF camera unit 1 and the object 10 in the environment 11 based on detector cells output and based on the reference clock signal 16 and the reference laser trigger signal 17, and/or the time information of the reference clock signal 16 and the time information of the reference laser trigger signal 17. The chip-internal circuit 12 modulates the laser trigger signal 6 into the drive signal 4.

In the shown embodiment of **Figure 1****,** the chip-internal circuit 12 comprises a first PLL, which modulates the clock signal 13 into the intermediate signal 14, the further circuit 15, in particular the FPGA 20, modulates an incoming input signal 19 with a defined input signal frequency (in the shown example 50 MHz) into the clock signal 13. The time resolver 18 is configured as a digital-I/O unit, wherein the digital-I/O unit 18 is comprised by a FPGA 20 of the further circuit 15. The further circuit 15 comprises a third return path which captures the reference drive signal 21 from the drive signal 4. The time resolver 18 is configured to detect time information of the reference drive signal 21.

In other words, the device 1 is equipped with an internal calibration path. The phase shift (delay) of the laser trigger signal 6 (and ideally also the output signal 4 of the laser driver 2 itself) is measured and set in relation to the clock signal 13 of the iToF camera 1 (here: 24 MHz) or the output signal of the iToF camera 1. The FPGA 20 is the clock master which receives a 50 MHz clock 19, which is set to 24 MHz for the iToF camera chip 5 via fractional PLLs. A 960 MHz clock 14 is generated internally in the sensor chip 5 with a PLL 12. The laser trigger signal 6 with a variable frequency between 10 and 150 MHz is derived from this 960 MHz clock 14. This signal 6 is used to control the laser driver 3 and finally for modulated illumination of the VCSEL 2. It is therefore not continuous but pulsed. The entirety of connected pulses is called a burst and a burst can be up to 1 ms long. This burst can be delayed by the sensor chip 5 for phase calibration with multiples of the period duration of the internal 960 MHz clock 14.

For example, a 60 MHz laser trigger signal 6 can be shifted in discrete 16 steps by 22.5° each (960/60 = 16). This shift 29 is not accurate enough and therefore has to be measured. Furthermore, the sensor chip 5 has internal variable delay elements 22, 23 which could be used additionally. However, these are too imprecise (deviation 27 between actual and target value). Thus, the actual delay has also to be measured. The laser driver 3 also has this variable delay functionality. This results in a further measuring point 21 at the output 4 of the laser driver 3.

By way of example, an appropriate way to measure the phase position of the laser trigger signals 6 is with the D I/O unit 18 of the FPGA 20. The phase position of the 24 MHz clock signal 13 is recorded (internally in the FPGA 20 or externally) and used as a reference 16 for subsequent evaluations. As further information about the delay 27, 28 from the laser trigger signal 6 to the light pulse 7, the laser driver output signal 4 is fed as the signal 21 to the FPGA 20 and recorded. This is used to determine the delay 27, 28 between the laser trigger signal 6 and the drive signal 4 of the VCSEL 2. The phase shift 29 for calibration can also be measured and compensated for in this way. It can be advantageous if the output trigger on the sensor chip 5 (detector cells output) is also measured directly in order to be able to determine possible further delays in the receive path of the sensor chip 5.

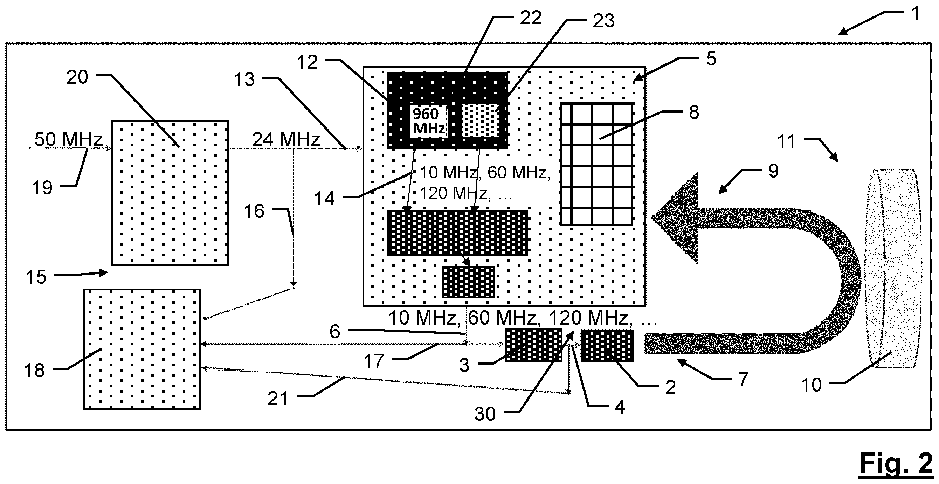

**Figure 2** shows also a schematic illustration of an exemplary embodiment of the ToF camera unit 1 according to the invention. This ToF camera unit 1 is configured largely in the same way as the ToF camera unit 1 shown in **Figure 1****.** In this exemplary embodiment, however, the time resolver 18 is configured as an (external) time-to-digital converter (TDC) or analog-to-digital converter (ADC) that is separate from the FPGA 20.

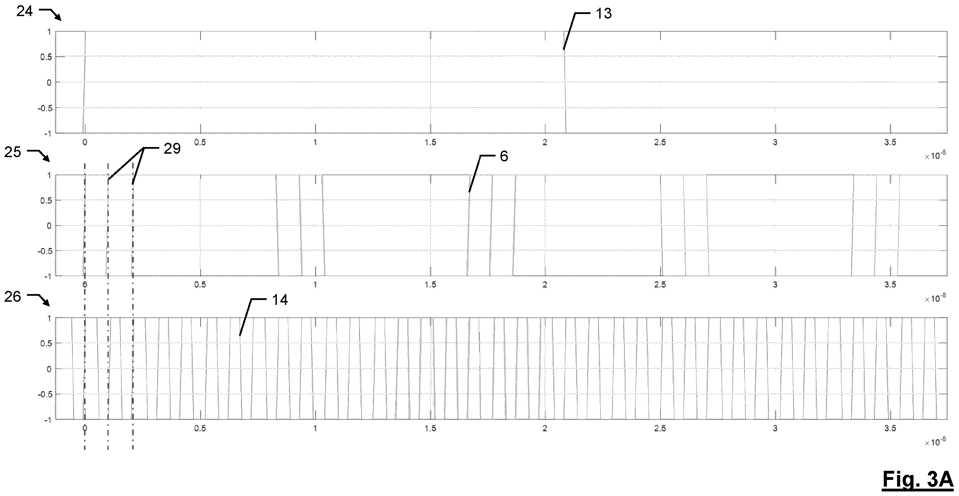

**Figure 3A** show schematic illustrations of timing graphs 24, 25, 26 to illustrate the phase courses, phase positions and phase shifts of corresponding signals 13, 6, 14. The timing graph 24 shows the clock signal 13 with a frequency of 24 MHz respectively the time information and thus also phase information of the clock signal 13, the timing graph 25 shows the laser trigger signal 6 with a frequency of 60 MHz respectively the time information and thus also phase information of the laser trigger signal 6 and the timing graph 26 shows the intermediate signal 14 with a frequency of 960 MHz respectively the time information and thus also phase information of the intermediate signal 14. Furthermore, the timing graph 25 shows by way of example that the 60 MHz laser trigger signal 6 has been phase-shifted twice by one period of the 960 MHz intermediate signal 14.

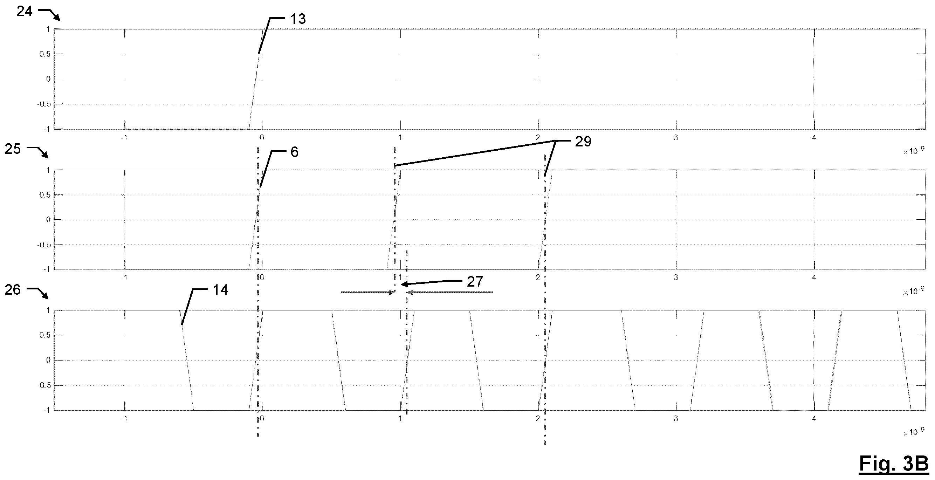

**Figure 3B** shows enlarged sections of the timing graphs 24, 25, 26 to illustrate the misalignment error / cyclic error / phase error 27. This shows that the phase shift 29 is too inaccurate and is not in phase with the 960 MHz signal 14, which is expressed in the phase error 27.

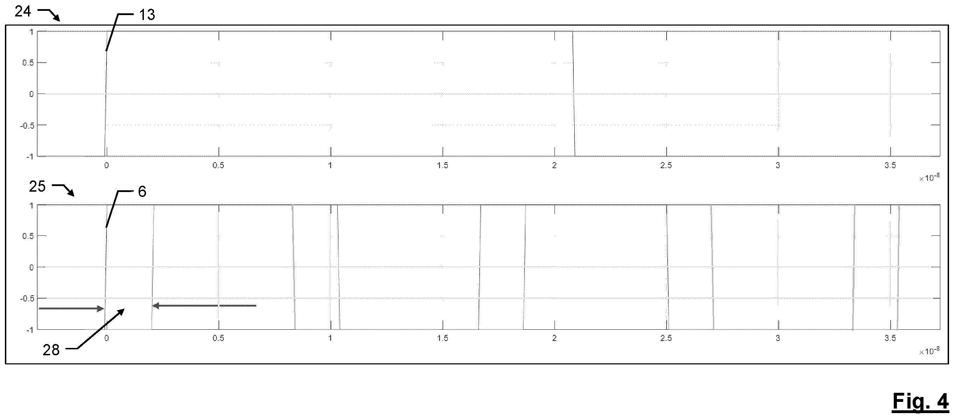

As shown in **Figure 4****,** this phase error 27 can be further increased / amplified by an undesired temperature-induced phase shift 28. The time measurement of the sensor chip 5 is based on the 24 MHz clock signal 13. If the propagation time / runtime of the laser trigger signal 6 or the output signal 4 of the laser driver 3 changes due to temperature variation, this results in a distance error.

Although the invention is illustrated above, partly with reference to some preferred embodiments, it must be understood that numerous modifications and combinations of different features of the embodiments can be made. All of these modifications lie within the scope of the appended claims.

## Claims

1. A time-of-flight (ToF) camera unit (1) configured for capturing three-dimensional point-cloud data of an environment (11), wherein the ToF camera unit (1) comprises a laser emitter (30) configured to emit modulated light signals (7) when triggered in accordance with a laser trigger signal (6), and a sensor chip (5), wherein the sensor chip (5) comprises
• detector cells (8) configured to receive reflections (9) of the emitted light signals (7) at an object (10) in the environment (11), and
• a chip-internal circuit (12) configured to modulate, dependent on a clock signal (13) with a defined clock signal frequency, an intermediate signal (14) with a defined intermediate signal frequency into the laser trigger signal (6), and
• a processing unit configured to determine a distance between the ToF camera unit (1) and the object (10) in the environment (11) based on detector cells output,
**characterized in that**
the ToF camera unit (1) further comprises
• a further circuit (15) comprising
∘ a first return path configured to capture a reference clock signal (16) from the clock signal (13), and
∘ a second return path configured to capture a reference laser trigger signal (17) from the laser trigger signal (6), and
• a time resolver (18), wherein the time resolver (18) is configured to detect time information of the reference clock signal (16) and time information of the reference laser trigger signal (17),
wherein the processing unit is configured to further determine the distance between the ToF camera unit (1) and the object (10) in the environment (11) based on
• the reference clock signal (16) and the reference laser trigger signal (17), and/or
• the time information of the reference clock signal (16) and the time information of the reference laser trigger signal (17).

2. ToF camera unit (1) according to claim 1, wherein the processing unit is configured to
• compare a phase of the reference laser trigger signal (17) with a phase of the reference clock signal (16), and
• determine a misalignment error (27, 28), which leads to a shift in an actual phase position of the laser trigger signal (6) from a phase position intended for the laser trigger signal (6), based on the comparison of the phases of the reference laser trigger signal (17) and the reference clock signal (16).

3. ToF camera unit (1) according to claim 1 or 2, wherein the processing unit is configured to determine a misalignment error (27, 28) based on
• a modulation of the intermediate signal (14) into the laser trigger signal (6) such that the laser trigger signal (6) has a laser trigger frequency with a value which, multiplied by a number n, results in a value of the intermediate signal frequency, wherein the number n is a natural number, and
• a shifting (29) of a phase of the laser trigger signal (6) stepwise by the value of the laser trigger frequency, wherein the number of steps that the phase of the laser trigger signal (6) is shifted corresponds to the number n,
wherein the misalignment error (27, 28) is an error between an actual shift of the phase of the laser trigger signal (6) and an intended shift of the phase of the laser trigger signal (6), in particular wherein the processing unit is further configured to calibrate-out the misalignment error (27, 28).

4. ToF camera unit (1) according to one of claims 1 to 3, wherein the processing unit is configured to determine
• phase positions of the reference clock signal (16) based on the time information of the reference clock signal (16), and/or
• phase positions of the reference laser trigger signal (17) based on time information of the reference laser trigger signal (17).

5. ToF camera unit (1) according to one of claims 1 to 4, wherein the laser emitter (30) comprises a laser diode (2), in particular a vertical-cavity surface-emitting laser (VCSEL), and a laser driver (3), wherein the laser driver (3) is configured to activate the laser diode (2) based on a drive signal (4), in particular wherein the chip-internal circuit (12) is configured to modulate the laser trigger signal (6) into the drive signal (4).

6. ToF camera unit (1) according to claim 5, wherein
• the further circuit (15) comprises a third return path configured to capture a reference drive signal (21) from the drive signal (4), and
• the time resolver (18) is configured to detect time information of the reference drive signal (21).

7. ToF camera unit (1) according to claim 2 or 3, wherein the misalignment error (27, 28) is at least caused by temperature differences in the ToF camera unit (1).

8. ToF camera unit (1) according to one of claims 1 to 7, wherein
• the chip-internal circuit (12) comprises a first phase locked loop (PLL), in particular wherein the first PLL is configured to modulate the clock signal (13) into the intermediate signal (14), and/or
• the time resolver (18) is configured as
∘ a digital-I/O unit, wherein the digital-I/O unit is comprised by a field programmable gate array (FPGA) (20) of the further circuit (15), and/or
∘ a time-to-digital converter (TDC), and/or
∘ an analog-to-digital converter (ADC).

9. ToF camera unit (1) according to one of claims 1 to 8, wherein
• the clock signal (13) comprises a clock signal frequency in a range from 10 MHz to 50 MHz, in particular 24 MHz, and/or
• the intermediate signal (14) comprises an intermediate signal frequency in a range from 600 MHz to 1200 MHz, in particular 960 MHz, and/or
• the laser trigger signal (6) comprises a laser trigger frequency in a range from 10 MHz to 150 MHz, in particular 60 MHz.

10. ToF camera unit (1) according to one of claims 1 to 9, wherein the determination of the distance between the ToF camera unit (1) and the object (10) in the environment (11) is based on the determination of a phase difference between phases of the light signals (7) emitted by the laser emitter (30) and phases of the reflected light signals (9) received by the detector cells (8).

11. A method for determining a distance between a ToF camera unit (1) and an object (10) in the environment (11), wherein the ToF camera unit (1) is configured for capturing three-dimensional point-cloud data of the environment (11), wherein the ToF camera unit (1) comprises a laser emitter (30) configured to emit modulated light signals (7) when triggered in accordance with a laser trigger signal (6), and a sensor chip (5), wherein the sensor chip (5) comprises detector cells (8) configured to receive reflections (9) of the emitted light signals (7) at an object (10) in the environment (11), and a chip-internal circuit (12), and a processing unit, wherein the ToF camera unit (1) further comprises a further circuit (15) comprising a first return path and a second return path, and a time resolver (18), the method comprising the steps of:
• modulation of, dependent on a clock signal (13) with a defined clock signal frequency, an intermediate signal (14) with a defined intermediate signal frequency into the laser trigger signal (6), and
• determination of the distance between the ToF camera unit (1) and the object (10) in the environment (11) based on detector cells output, and
• capturing a reference clock signal (16) from the clock signal (13) and a reference laser trigger signal (17) from the laser trigger signal (6), and
• detecting time information of the reference clock signal (16) and time information of the reference laser trigger signal (17), and
• determination of the distance between the ToF camera unit (1) and the object (10) in the environment (11) based on the reference clock signal (16) and the reference laser trigger signal (17), and/or the time information of the reference clock signal (16) and the time information of the reference laser trigger signal (17).

12. Method according to claim 11, wherein the method further comprises the steps of:
• comparison of the phase of the reference laser trigger signal (17) with a phase of the reference clock signal (16), and
• determination of a misalignment error (27, 28), which leads to a shift in an actual phase position of the laser trigger signal (6) from a phase position intended for the laser trigger signal (6), based on the comparison of the phases of the reference laser trigger signal (17) and the reference clock signal (16).

13. Method according to claim 11 or 12, wherein the method further comprises the steps of:
• modulation of the intermediate signal (14) into the laser trigger signal (6) such that the laser trigger signal (6) has a laser trigger frequency with a value which, multiplied by a number n, results in a value of the intermediate signal frequency, wherein the number n is a natural number, and
• shifting (29) of a phase of the laser trigger signal (6) stepwise by the value of the laser trigger frequency, wherein the number of steps that the phase of the laser trigger signal (6) is shifted corresponds to the number n,
in order to determine a misalignment error (27, 28), wherein the misalignment error (27, 28) is an error between an actual shift of the phase of the laser trigger signal (6) and an intended shift of the phase of the laser trigger signal (6).

14. A computer-readable storage medium comprising instructions which, when executed by a processing unit of the ToF camera unit (1) according to any of claims 1 to 10, cause the processing unit to carry out the steps of the method of any of claims 11 to 13.
